# EUROPÄISCHE PATENTSCHRIFT

(11) **EP 0 569 031 B1**
(45) Veröffentlichungstag und Bekanntmachung des Hinweises auf die Patenterteilung: **29.11.1995**
(21) Anmeldenummer: 93107474.4
(22) Anmeldetag: 07.05.1993
(51) Int. Cl.: F16D 65/56, F16D 65/16

(54) **Nachstellvorrichtung für eine Scheibenbremse**
Adjuster device for a disc brake
Dispositif de rattrapage de jeu pour un frein à disque

(30) Priorität: 08.05.1992 DE 4215200; 05.03.1993 DE 4307017; 24.03.1993 DE 4244673
(43) Veröffentlichungstag der Anmeldung: 10.11.1993
(73) Patentinhaber: DEUTSCHE PERROT-BREMSE GmbH, W-6800 Mannheim 71 (DE)
(72) Erfinder: Macke, Wlodzimierz, Dipl. Ing., 68519 Viernheim (DE); Jäger, Hellmut, Dipl. Ing., 68545 Edingen-Neckarhausen (DE); Baumgärtner, Rainer, Dipl.Ing., D 68309 Mannheim (DE)
(74) Vertreter: Patentanwälte Leinweber & Zimmermann

(56) Entgegenhaltungen:
- DE-A- 3 423 875
- DE-A- 4 032 886
- DE-U- 9 115 195

## Beschreibung

Die Erfindung betrifft eine Nachstellvorrichtung für eine Scheibenbremse, inbesondere eine Gleitsattel-Scheiben-bremse, mit mindestens zwei Druckspindeln, die an einer Bremsbacke anliegen und die in ein durch Drehen einer Bremswelle um eine Drehachse mit Druck in Richtung auf eine Bremsscheibe beaufschlagbares Druckstück eingeschraubt sind, und mit einem kraftabhängigen Freilaufgetriebe, das einerseits mit der Bremswelle und andererseits mit den Druckspindeln drehgekoppelt ist.

Eine Nachstellvorrichtung der eingangs genannten Art ist aus der DE 40 32 886 A1 bekannt. Dabei liegt mindestens eine Nachstellvorrichtung axial innerhalb einer der Druckspindeln. Die Nachstellvorrichtung ist mit einer Verlängerung in einer Halteöffnung des Sattels gelagert. Zum gleichmäßigen Nachstellen der Druckspindeln ist eine sogenannte Synchronisiereinrichtung in Form eines Zahnriemes vorgesehen. Die Lagerung des Zahnriemens ist sehr aufwendig und bedarf eines eigenen Bauraums. Ferner ist für die Verlängerung der Nachstellvorrichtung ebenfalls zusätzlicher Bauraum erforderlich.

Der Zahnriemen hat eine gewisse Elastizität. Darüber hinaus sind Schwingungen von Zahnriemenabschnitten zwischen entsprechenden Zahnrädern nicht auszuschließen. Die Nachstellvorrichtung kann daher nicht mit der erforderlichen Präzision arbeiten.

Aus der DE 40 34 165 A1 und der DE 40 20 485 A1 sind der obigen Nachstellvorrichtung sehr ähnliche Nachstellvorrichtungen bekannt, bei denen ebenfalls jeweils eine Gleichlaufeinrichtung bzw. Synchronisiereinrichtung mit einem Zahnriemen vorgesehen ist.

Weitere Nachstellvorrichtungen mit Synchronisierung in Form eines Zahnriemens sind aus der DE 36 10 569 und der DE 37 16 202 bekannt.

Die Nachstellvorrichtung, von der die vorliegende Erfindung ausgeht, arbeitet kraftabhängig. Wegabhängig arbeitende und damit weiter abliegende Nachstellvorrichtungen sind aus den Druckschriften DE 34 23 875, US-PS 3 830 343, DE 24 00 470, DE 24 09 812, DE 25 07 012 und DE 28 17 389 bekannt. In diesem Zusammenhang ist auch noch auf die DE 19 51 312 hinzuweisen, nach der die Nachstellvorrichtung im Bremssattel auf der Felgenseite angeordnet ist. Dadurch verlängert sich die Bremse nachteilig axial auf dieser Seite. Ferner erfolgt die Nachstellung wegen der Wegabhängigkeit auch infolge von (vorübergehenden) Sattelverformungen.

Der Erfindung liegt die Aufgabe zugrunde, eine Nachstellvorrichtung der eingangs genannten Art anzugeben, die minimalen zusätzlichen Bauraum benötigt und eine präzise kraftabhängige Nachstellung unter Synchronisation der Drehung der Druckspindeln erlaubt.

Erfindungsgemäß wird die gestellte Aufgabe durch eine sich konzentrisch zur Drehachse der Bremswelle durch eine Ausnehmung in der Bremswelle erstreckende Nachstellwelle zur Drehkopplung des Freilaufgetriebes mit den Druckspindeln gelöst.

Dadurch, daß sich die Nachstellwelle innerhalb der Bremswelle erstreckt, benötigt sie keinen zusätzlichen Bauraum.

Die Nachstellwelle ist mit beiden Druckspindeln gekoppelt, so daß sich eine Gleichlaufeinrichtung in Form eines Zahnriemens erübrigt. Dadurch wird zum einen die Baugröße weiter minimiert, zum anderen treten die oben erläuterten Probleme im Zusammenhang mit der Elastizität des Zahnriemens nicht auf.

Dennoch ist ein präzises und synchrones Drehen der Druckspindeln zum Zwecke der Nachstellung sichergestellt.

Das Freilaufgetriebe kann irgendwo im Bereich der Bremse angeordnet sein solange eine Wirkverbindung einerseits mit der Bremswelle und andererseits mit der Nachstellwelle sichergestellt ist. Erfindungsgemäß bevorzugt ist es jedoch, daß das Freilaufgetriebe (ebenfalls) innerhalb der Ausnehmung liegt, wodurch eine weitere Verringerung der Baugröße erzielt wird.

Sollte es beim Bremsen zu einem Verkanten eines gegebenenfalls am belagseitigen Ende einer Druckspindel vorgesehenen Druckstempels kommen, so kann dies durch die einwirkenden Bremsumfangkräfte zu einer seitlichen Relativbewegung zwischen dem Druckstempel und der Druckspindel einerseits und dem Belag andererseits derart führen, daß die entsprechende Druckspindel um ihre Mittelachse verdreht wird. Sind entsprechend dem Stand der Technik die Druckspindeln mit gleichsinnigen Gewinden in das Druckstück eingeschraubt und über einen Zahnriemen miteinander gekoppelt, könnten sie bei einer Verdrehung entsprechend der Bremsrichtung zuviel nachgestellt werden bzw. könnte die Nachstellung wieder zurückgedreht werden.

Nach einer weiter bevorzugten Ausführungsform der Erfindung ist daher vorgesehen, daß die Gewinde zum Einschrauben der Druckspindeln in das Druckstück zueinander gegensinnig sind. Dadurch blockieren sie sich gegenseitig gegen ungewolltes Verdrehen. Bei einem Gleichlauf- bzw. Synchronisierungsgetriebe in Form eines Zahnriemens ist ein gegensinniges Einschrauben der Druckspindeln gar nicht möglich.

Bevorzugt ist ferner ein Winkeltrieb zwischen der Nachstellwelle und den Druckspindeln.

Die Nachstellwelle kann in jeder beliebigen Art und Weise an dem Freilaufgetriebe angekoppelt sein. Erfindungsgemäß bevorzugt ist es jedoch, daß die Nachstellwelle eine Profilwelle ist, die einen Nachstellring des Freilaufgetriebes mit einem entsprechenden Innenprofil durchdringt, wobei ein Anschlagsspiel zwischen dem Außenprofil der Nachstellwelle und dem Innenprofil des Nachstellrings das Bremslüftspiel bestimmt. Zur Erzeugung eines Rückdrehmomentes bei Bremsentlastung kann erfindungsgemäß das kraftabhängige Freilaufgetriebe eine Schraubenfeder aufweisen, die sich an der Abtriebseite des Freilaufgetriebes unter Reibschluß abstützt.

Nachstehend ist die Erfindung anhand eines bevorzugten Ausführungsbeispiels unter Bezugnahme auf die beiliegende Zeichnung mit weiteren Einzelheiten näher erläutert.Dabei zeigen
- FIG. 1: einen Schnitt parallel zur Bremsenachse durch eine Gleitsattel-Scheibenbremse mit einer erfindungsgemäßen Nachstellvorrichtung,

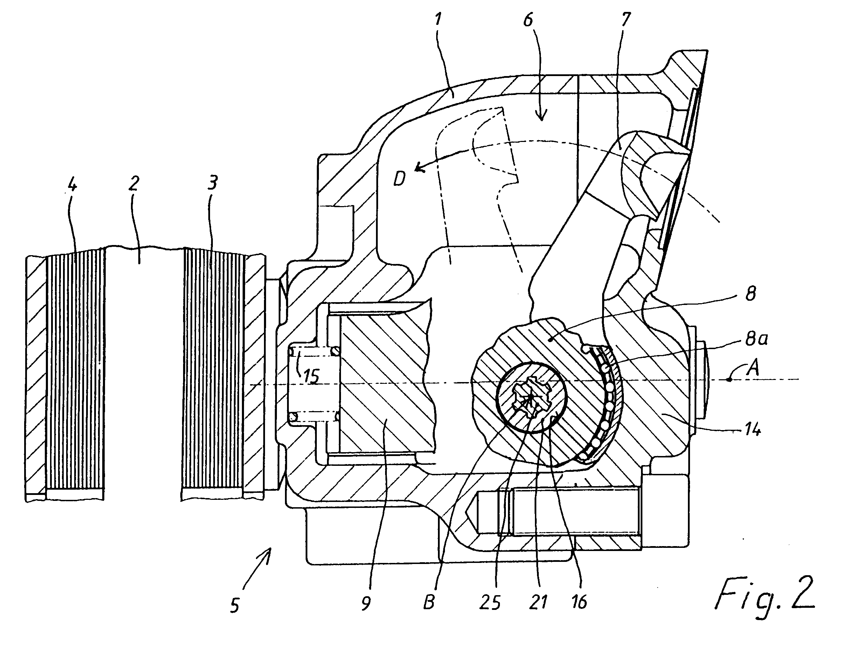

- FIG. 2: einen Schnitt ebenfalls parallel zur Bremsenachse, jedoch senkrecht zu dem Schnitt nach FIG. 1 und
- FIG. 3: einen Schnitt durch eine Nachstellwelle mit zugehörigem Nachstellring, in größerem Maßstab.

Die in der Zeichnung dargestellte Scheibenbremse weist einen Bremssattel 1 auf, der in üblicher Weise mit seinen beiden Schenkeln eine Bremsscheibe 2 übergreift. Beidseits der Bremsscheibe 2 sind Bremsbeläge 3,4 in einem Bremsenträger 5 oder am Bremssattel geführt und abgestützt. Der Bremssattel 1 ist mittels nicht dargestellter Führungsmittel quer zur Bremsscheibe 2 verschiebbar gelagert. Er weist eine Zuspannung 6 zum Betätigen der Bremse auf.

Die Zuspannung 6 besteht im wesentlichen aus einem Bremshebel 7 mit einer in einer Ebene parallel zur Bremsscheibe 2 liegenden Bremswelle 8 und einem im Bremssattel 1 axial verschiebbar angeordneten Druckstück 9. In das Druckstück 9 sind in der Ebene A der Bremsenachse zwei Druckspindeln 10,11 eingeschraubt. Die Gewindepaare zwischen der Druckspindel 10 und dem Druckstück 9 bzw. der Druckspindel 11 und dem Druckstück 9 sind zueinander gegensinnig, wodurch sie sich gegen ungewolltes Verdrehen gegenseitig blockieren. In die Druckspindeln 10,11 sind bremsscheibenseitig Druckstempel 12 bzw. 13 eingesteckt.

Der Bremshebel 7 stellt die Verbindung zwischen einem mit dem Bremssattel gekoppelten Bremszylinder bzw. Bremsgestänge (nicht dargestellt) und der Bremswelle 8 dar.

Die Bremswelle 8 ist drehbar zwischen dem Druckstück 9 und dem Bremssattelrückenteil bzw. einem Deckel 14 gelagert und weist zum Druckstück 9 hin eine Zuspannkontur auf. Die Zuspannkontur kann in Form eines Nockens, eines Exzenters, einer Evolvente, oder dgl. ausgeführt sein. Bei Drehung der Bremswelle 8 um eine Achse B erfolgt wegen des Nockens, des Exzenters oder der Evolvente eine Verschiebung des Druckstücks 9 in Richtung auf die Bremsscheibe 2. Die Drehachse B ist verschiebeneutral, d.h. sie verschiebt sich bei Drehung der Bremwelle 8 nicht gegenüber dem Bremssattel 1.

Eine Druckfeder 15 stützt sich einerseits am Bremssattel 1 und andererseits an dem Druckstück 9 ab, wodurch sie das Druckstück 9 und damit die Bremswelle 8 über ein Wälzlager 8a mit dem Deckel 14 verspannt.

Die Bremswelle 8 weist konzentrisch zu ihrer Drehachse B eine Durchgangsöffnung 16 auf. In der Durchgangsöffnung 16 ist eine allgemein mit 17 bezeichnete zentrale Kraftabhängige Nachstellvorrichtung für beide Druckspindeln 10,11 angeordnet. Die Nachstellvorrichtung 17 ist direkt mit der Bremswelle 8 gekoppelt.

In die Öffnung 16 der Bremswelle 8 ist gegen einen Sicherungsring 19 ein Hülsenfreilauf 18 eingepreßt. Der Hülsenfreilauf 18 sitzt zur Drehmomentübertragung auf einer Nachstellhülse (Antriebshülse) 20, die sich mit ihrem radialen Bund gegen den Außenring des Hülsenfreilaufs abstützt. Ein Nachstellring (Abtriebsring) 21 liegt unter Vorspannung durch eine Schraubenfeder 22, die sich ihrerseits an einem Sicherungsring 23 an der Bremswelle 8 abstützt, an der Nachstellhülse 20 an. Bei Bremsentlastung wird dadurch ein Rückdrehmoment auf den Nachstellring 21 zur Gewährleistung einer gleichmäßigen Lüftspieleinstellung ausgeübt. Eine detaillierte Erläuterung ist weiter unten in der Funktionsbeschreibung gegeben.

Die Nachstellhülse 20 und der Nachstellring 21 stehen über eine Stirnverzahnung in Form eines durch die Schraubenfeder 22 vorgespannten Zahngesperres 24 formschlüssig miteinander in Eingriff, um die kraftabhängige Kupplung zur Begrenzung der Drehmomentübertragung zu bilden.

Selbstverständlich können anstelle des Zahngesperres 24 auch eine federvorgespannte Reibkupplung (Konus oder Reibscheiben) oder dgl. vorgesehen sein.

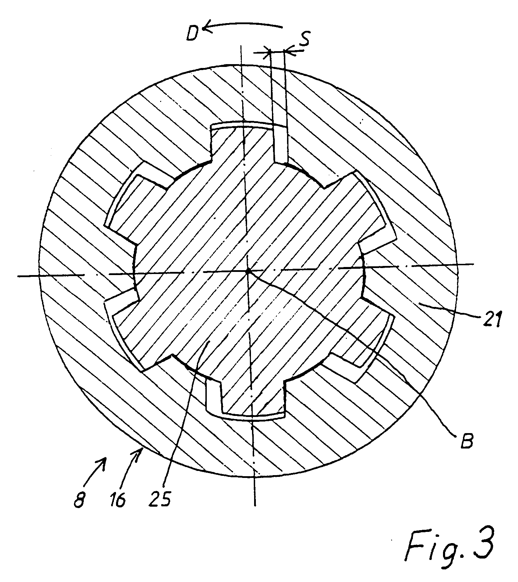

Eine als Profilwelle ausgebildete Nachstellwelle 25 durchdringt die Nachstellhülse 20 und den Nachstellring 21 konzentrisch zu der Drehachse B. Gemäß FIG. 3 weist der Nachstellring 21 als Abtriebsring ein Innenprofil auf, das zu einem Formschluß mit dem Außenprofil der Nachstellwelle 25 geeignet ist. Dadurch kann er einerseits mit der Nachstellwelle 25 zur Drehmomentübertragung in Wirkverbindung stehen. Andererseits ist er bei einem Zahnsprung an dem Zahngesperre 24 axial gegen die Vorspannkraft der Schraubenfeder 22 auf der Nachstellwelle 25 verschiebbar.

Demgegenüber ist die Nachstellhülse 20 als Antriebshülse drehbeweglich gegenüber der Nachstellwelle 25 gehalten.

Zwischen dem Innenprofil des Nachstellrings 21 und dem Außenprofil der Nachstellwelle 25 ist ein Anschlagspiel S vorgesehen, mit dem die Größe des Lüftspiels der Bremse festgelegt ist.

Die Nachstellwelle 25 trägt an ihren Enden jeweils ein Kegelrad 26 bzw. 27. Die Kegelräder 26,27 haben ein dem Außenprofil der Nachstellwelle 25 entsprechendes Innenprofil und sind jeweils mit einem Sicherungsring 28 gesichert. Mithin sind sie drehfest und axial unverschieblich auf der Nachstellwelle 25 befestigt.

Zur Gewährleistung der Leichtgängigkeit einer Verdrehung der Kegelräder 26,27 gegenüber der Bremswelle 8 sind die Kegelräder mit geringem axialen Spiel seitlich gegen die Bremswelle 8 und mit geringem radialen Spiel in der Durchgangsöffnung 16 mittels eines Ansatzes gelagert.

Mit den Kegelrädern 26,27 kämmen in einem Winkel von annähernd 90° Kegelräder 29 bzw. 30. Damit ist beidseits der Bremswelle 8 jeweils ein Winkeltrieb gebildet. Der Winkeltrieb kann auch durch Kronenräder, Reibräder oder dgl. gebildet sein.

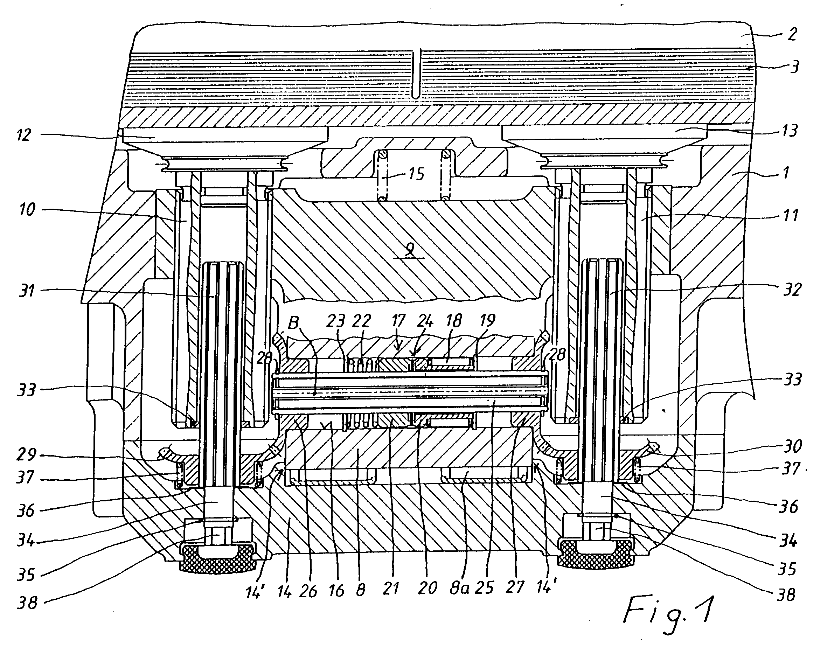

Die Kegelräder 29,30 sind jeweils drehfest auf einer Profilwelle 31 bzw. 32 angeordnet. Die Profilwellen 31,32 erstrecken sich jeweils axial in einer Ausnehmung der Druckspindeln 10 bzw. 11. Um die Winkeltriebe vor Belastungen zu schützen, ist die Bremswelle 8 gemäß FIG. 1 in axialer Richtung zwischen seitlichen Anschlägen 14' des Deckels 14 positioniert.

Ähnlich der Ausgestaltung nach FIG. 3 stehen die Profilwellen 31,32 jeweils mittels einer entsprechend gestalteten Profilscheibe 33 drehfest mit den Druckspindeln 10 bzw. 11, jedoch axial dazu verschieblich in Wirkeingriff.

Die Profile können beliebige Konturen aufweisen und beispielsweise auch in Form von Stift-Nut-Verbindungen ausgeführt sein. Dies gilt im übrigen auch im Zusammenhang mit FIG 3.

Während das Lüftspiel der Bremse nach dem hier erläuterten Ausführungsbeispiel durch ein entsprechendes Anschlagspiel bei der Verbindung zwischen dem Nachstellring 21 und der Nachstellwelle 25 festgelegt wird, kann es auch durch ein entsprechendes Anschlagspiel zwischen den Profilscheiben 33 einerseits und den Profilwellen 31, 32 andererseits eingestellt werden.

Zum Deckel 14 hin weisend ist jede Profilwelle 31, 32 mit einem zylindrischen Ansatz 34 versehen. Die Ansätze sind in einer zugehörigen Öffnung des Deckels 14 mittels eines Sicherungsrings 35 drehbar gehaltert. Anstelle des Sicherungsrings 35 kann auch ein Federelement oder dergleichen vorgesehen sein. Zwischen dem Absatz des Profilabschnitts der Profilwellen 31, 32 und dem Deckel 14 sind Tellerfedern 36 eingespannt, um auf die Profilwellen 31, 32 ein Reibmoment aufzubringen, das zum Halten der zentralen Nachstellvorrichtung 17 beim Bremslösevorgang dient.

Darüber hinaus ist es auch denkbar, die Sicherungsringe 35 und die Tellerfedern 36 durch Spannelemente zu ersetzen, die gleichzeitig die Halte- und die Federfunktion erfüllen.

Die auf den Profilwellen 31, 32 gelagerten Kegelräder 29, 30 sind jeweils axial auf den Profilwellen 31, 32 verschieblich. Sie sind über eine sich am Deckel 14 abstützende Druckfeder 37 gegen die anderen Kegelräder 26, 27 vorgespannt. Dadurch wird gewährleistet daß einerseits der Zahneingriff konstant ist und andererseits Lage- und Herstellungstoleranzen ausgeglichen werden.

Die Kegelräder 26, 27, 29, 30 können in ihrer Größe entsprechend dem gewünschten Übersetzungsverhältnis gewählt werden.

An den Enden der zylindrischen Ansätze 34 ist jeweils eine Außenkontor 38 ausgeformt, wodurch die Profilwellen 31, 32 mit einem zugehörigen Werkzeug ein- oder ausgedreht werden können. Selbstverständlich kann anstelle der Außenkontur 38 auch eine Innenkontur vorgesehen sein. Damit kann die Rückstellung der Druckspindeln 1O, 11 bei einem Belagwechsel von außen, d.h. von der bremsscheibenabgewandten Seite des Druckstücks 9 durch Drehen an einer beliebigen Druckspindel erfolgen. Demgegenüber ist nach dem Stand der Technik jeweils immer nur eine Druckspindel mit einer Rückstelleinrichtung versehen, was zu Problemen führt, wenn gerade diese Rückstelleirichtung wegen der geometrischen Gegenbenheiten der Bremse nur schwer zugänglich ist.

Nachstehend ist die Funktionsweise des in der Zeichnung dargestellten Ausführungsbeispiels der Erfindung erläutert.

Bei nicht betätigter Bremse weisen die Bremsbeläge 3, 4 gegenüber der Bremsscheibe 2 dasjenige Lüftspiel auf, das als Anschlagspiel S nach Figur 3 zwischen den Profilen des Nachstellringes 21 und der Nachstellwelle 25 festliegt. Bei Betätigung der Zuspannung 6 wird der Bremshebel 7 in Richtung des Pfeiles D geschwenkt und dadurch die mittels der Wälzlagerung 8a am Deckel 14 abgestützte Bremswelle 8 um ihre Drehachse B gedreht. Die Drehachse B ist ortsfest, weil sie konzentrisch zu dem von dem Wälzlager 8a beschriebenen Kreisbogen liegt.

Da sich die Drehung der Bremswelle 8 in einer Wegzunahme ihrer Kontur in Richtung auf die Bremsscheibe 2 äußert, wird das Druckstück 9 in der Ebene A der Bremsenachse gegen die Vorspannkraft der Druckfeder 15 in Richtung auf die Bremsscheibe 2 verschoben. Die in das Druckstück 9 eingeschraubten Druckspindeln 10, 11 folgen mit ihren Druckstempeln 12, 13 und dem Bremsbelag 3 dieser Bewegung.

Da die Drehachse B der Bremswelle 8 ortsfest liegt, folgen demgegenüber die zentrale Nachstellvorrichtung 17 sowie die am Bremssattel 1 gehaltenen Profilwellen 31, 32 dieser Verschiebebewegung jedoch nicht.

Die Bremswelle 8 nimmt bei ihrer Drehung den in der Durchgangsöffnung 16 festgelegten Außenring des Hülsenfreilaufs 18 mit, wodurch der in dieser Drehrichtung einkuppelnde Hülsenfreilauf 18 die Nachstellhülse 20 mitdreht. Da der Nachstellring 21 über das mittels der Schraubenfeder 22 federvorgespannte Zahngesperre 24 an die Nachstellhülse 20 angekoppelt ist, dreht auch der Nachstellring 21 mit. Eine Drehung des Nachstellrings 21 bewirkt zunächst noch keine Drehung der Nachstellwelle 25 bedingt durch das Anschlagspiel S und durch die bereits erwähnten Lagerspiele der Kegelräder 26, 27 ohne Reibschluß gegenüber der sich drehenden Bremswelle 8 und da die Tellerfedern 36 ein Reibmoment auf die Profilwellen 31, 32 und damit auch ein Moment auf die Winkeltriebe ausüben, so daß jede unerwünschte Drehung ausgeschlossen ist.

Wird in der Anlegephase der Beläge 3, 4 an die Bremsscheibe 2, in der noch keine Verspannungen auf das gesamte Bremssystem wirken, das Anschlagspiel S zwischen dem Nachstellring 21 und der Nachstellwelle 25 überschritten, so dreht der Nachstellring 21 schließlich die Nachstellwelle 25 entsprechend der Schwenkbewegung des Bremshebels 7 mit. Da die Federkraft der auf das Zahngesperre 24 wirkenden Schraubenfeder 22 größer als die Reibkraft der Tellerfedern 36 ist, werden auch die Kegelräder 26, 27 , 29, 30 als Winkeltriebe mit den Profilwellen 31, 32 gedreht. Über den Formschluß mit den Profilscheiben 33 werden damit auch die Druckspindeln 10, 11 synchron in Richtung auf die Bremsscheibe 2 aus dem Druckstück 9 herausgeschraubt, um eine dem aktuellen Belagverschleiß entsprechende Nachstellung vorzunehmen.

Mit Anlage der Beläge 3, 4 an der Bremsscheibe 2 erhöhen sich in den Gewindepaarungen zwischen den Druckspindeln 10,11 einerseits und dem Druckstück 9 andererseits die Reibmomente derart, daß sie die Größe des Grenzmomentes der zentralen Nachstellvorrichtung 17 übersteigen und daher nicht weiter herausgeschraubt werden.

Somit werden auch die Profilwellen 31, 32, die beiden Winkeltriebe, die Nachstellwelle 25 und der Nachstellring 21 nicht weiter gedreht, so daß sie gegenüber der sich weiter entsprechend der Schwenkbewegung des Bremshebels 7 drehenden Bremswelle 8 stehenbleiben. Da die Nachstellhülse 20 bei weiterer Drehung der Bremswelle 8 durch den in dieser Richtung sperrenden Hülsenfreilauf 18 in Richtung der Schwenkbewegung des Bremshebels 7 mitgenommen wird, springt die mit dem federbelasteten Zahngesperre 24 versehene Nachstellhülse 20 gegenüber dem stehenden Nachstellring 21 um denjenigen Weganteil durch, der sich aus einer Addition der Verformung der Bremsenteile bei weiterer Zuspannung und des Betrages des Belagverschleißes während des Bremsvorgangs ergibt.

Beim Lösen der Bremse entspannt sich durch die Druckfeder 15 die Zuspannung 6, und die Bremswelle 8 dreht sich im Sinne der Schwenkbewegung des Bremshebels 7 zurück. Diese Drehung erfolgt unter Mitnahme des eingepreßten Hülsenfreilaufs in Entsperrichtung. Infolge des Reibmomentes der Tellerfedern 36 bleiben die Profilwellen 31, 32 mit den Winkeltrieben und der Nachstellwelle 25 stehen. Demgegenüber wird in Entsperrichtung des Hülsenfreilaufs 18 über die Reibung der sich an der Bremswelle 8 abstützenden Schraubenfeder 22 das federbelastete Zahngesperre 24 so weit mit der Bremswelle 8 zurückgedreht, bis der Nachstellring 21 wieder mit dem Anschlagspiel S am Profil der stehenden Nachstellwelle 25 anliegt. Daraufhin übersteigt auch hier die Kraft der Tellerfedern 36 diejenige der Federreibung der Schraubenfeder 22, und der Nachstellring 21 bleibt mit der Nachstellhülse 20 in dieser Position stehen.

Die restliche Rückdrehung der Bremswelle 8 erfolgt dann weiterhin in Entsperrichtung des Hülsenfreilaufs 18 mit dem Weganteil für den nächsten Nachstellschritt bei einer erneuten Bremsbeaufschlagung.

Im folgenden ist beim obigen Ausführungsbeispiel der erfindungsgemäßen Nachstellvorrichtung die Rückstellung für einen Belagwechsel erläutert.

Wird die Profilwelle 31 entgegen der Nachstellrichtung über ihre Außenkontur 38 mittels eines Werkzeugs gedreht, schraubt sich die zugeordnete Druckspindel 10 in das Druckstück 9 zurück. Gleichzeitig wird über den Winkeltrieb 29, 26 die Nachstellwelle 25 mitgedreht, und der federvorgespannte Nachstellring 21 rutscht gegenüber der Nachstellhülse 20, die durch den Hülsenfreilauf 18 in Sperrichtung drehfest gehalten wird, durch. Über den Winkeltrieb 27, 30 auf der anderen Seite der Nachstellwelle 25 wird gleichzeitig die Profilwelle 32 angetrieben, die ihrerseits die Druckspindel 11 in das Druckstück 9 zurückschraubt.

In analoger Weise erfolgt eine synchrone Zurückschraubung der Druckspindeln 10, 11 bei Betätigung der Profilwelle 32 über deren Außenkontur 38.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Nachstellvorrichtung für eine Scheibenbremse, insbesondere eine Gleitsattelscheibenbremse, mit mindestens zwei Druckspindeln (10, 11), die an einer Bremsbacke (3) anliegen und die in ein durch Drehen einer Bremswelle (8) um eine Drehachse (B) mit Druck in Richtung auf eine Bremsscheibe (2) beaufschlagbares Druckstück (9) eingeschraubt sind, und mit einem kraftabhängigen Freilaufgetriebe (18 bis 24), das einerseits mit der Bremswelle (8) und andererseits mit den Druckspindeln (10, 11) drehgekoppelt ist, gekennzeichnet durch eine sich konzentrisch zur Drehachse (B) der Bremswelle (8) durch eine Ausnehmung (16) in der Bremswelle (8) erstreckende Nachstellwelle (25) zur Drehkopplung des Freilaufgetriebes (18 bis 24) mit den Druckspindeln (10, 11).

2. Nachstellvorrichtung nach Anspruch 1, dadurch gekennzeichnet, daß das Freilaufgetriebe (18 bis 24) innerhalb der Ausnehmung (16) liegt.

3. Nachstellvorrichtung nach Anspruch 1 oder 2, dadurch gekennzeichnet, daß die Gewinde zum Einschrauben der Druckspindeln (10,11) in das Druckstück (9) zueinander gegensinning sind.

4. Nachstellvorrichtung nach einem vorangehenden Ansprüche gekennzeichnet durch einen Winkeltrieb (26,27,29,30) zwischen der Nachstellwelle (25) und den Druckspindeln (10,11).

5. Nachstellvorrichtung nach einem der vorangehenden Ansprüche dadurch gekennzeichnet, daß die Nachstellwelle (25) eine Profilwelle ist, die einen Nachstellring (21) des Freilaufgetriebes (18 bis 24) mit einem entsprechenden Innenprofil durchdringt, wobei ein Anschlagspiel. (S) zwischen dem Außenprofil der Nachstellwelle (25) und dem Innenprofil des Nachstellrings (21) das Bremslüftspiel bestimmt.

6. Nachstellvorrichtung nach einem der vorangehenden Ansprüche, dadurch gekennzeichnet, daß das kraftabhängige Freilaufgetriebe ( 18 bis 24) eine Schraubenfeder (22) aufweist, die sich an der Abtriebseite des Freilaufgetriebes (18 bis 24) unter Reibschluß abstützt.

## Claims

1. Adjustment device for a disc brakes, especially a floating caliper disc brake, with at least two thrust spindles (10, 11), abutting at a lining (3) and are screwed in a thrust plate (9) creating a force in direction on the brake disc (2) caused by a turning movement of a brake shaft (8) using a force dependent free wheeling clutch drive (18 up to 24) which is connected turning on one side with the brake shaft (8) and also with the thrust spindles (10, 11), characterised by an operating shaft (25), which extends concentrically to the rotational axis (B) of the brake shaft through a recess (16) in the brake shaft (8) to rotationally couple the freewheeling clutch drive (18 up to 24) to the thrust spindles (10, 11).

2. Adjustment device according to claim 1, being characterised by the free-wheeling clutch drive (18 to 24) being within the recess (16).

3. Adjustment device according to claims 1 or 2 being characterised by the fact that the thread to screw in the thrust spindles (10, 11) into the thrust piece are counterrotating.

4. Adjustment device characterised by an earlier claim by an angular drive (26, 27, 29, 30) between the operating shaft (25) and the thrust spindles (10, 11).

5. Adjustment device characterised by a above claim that the operating shaft 25 is a profiled shaft which extends through a operating ring 21 having a corresponding inner profile, which is a member of the freewheeling clutch, wherewith the engagement play (S) between the outer profile of the operating shaft (25) and the inner profile of the operating ring (21) determines the braking air gap.

6. Adjustment device characterised by an above claim that the force dependent freewheeling clutch drive (18 up to 24) is provided with a helical spring (22), which friction locks in abutting relationship against the driven side of the freewheeling clutch drive.

## Revendications

1. Dispositif de rattrapage jeu pour un frein à disque en particulier pour un frein à étrier comprenant au moins deux broches de pression (10, 11), montées sur une mâchoire ou garniture de frein (3), et qui, par rotation d'un arbre de freinage (8) autour d un axe de rotation (B) sont vissés en exerçant une pression dans la direction d'une pièce de pression (9) susceptible d'actionner un disque de frein (2), et muni d'une transmission à roue libre (18 à 24) sensible à la force exercée, et qui est accouplé en rotation, d'une part avec l'arbre de freinage (8) et d'autre part avec les broches de pression (10, 11), caractérisé par un arbre de rattrapage de jeu (25), s'étendant concentriquement à l'axe de rotation (B) de l'arbre de freinage (8) à travers un passage (16) managé dans l'arbre de freinage (8) afin d'assurer l'accouplement en rotation de la transmission à roue libre (18 à 24) avec les broches de pression (10, 11).

2. Dispositif de rattrapage de jeu selon la revendication 1, caractérisé en ce que la transmission à roue libre (18 à 24) est disposée à l'intérieur du passage (16).

3. Dispositif de rattrapage de jeu selon la revendication 1 ou 2 caractérisé en ce que les filetages pour le vissage des broches de pression (10, 11) dans la pièce de pression (9) sont orientés dans des sens opposés l'un à l'autre.

4. Dispositif de rattrapage de jeu selon l'une des revendications précédentes, caractérisé par une transmission angulaire (26, 27, 29, 30) entre l'arbre de rattrapage de jeu (25) et les broches de pression (10, 11).

5. Dispositif de rattrapage de jeu selon l'une des revendications précédentes, caractérisé en ce que l'arbre de rattrapage de jeu (25) est un arbre profilé, qui traverse une ligne de rattrapage (21) de la transmission à roue libre (18-24) en présentant un profil intérieur correspondant, un jeu de butée (S) entre le profil extérieur de l'arbre de rattrapage (25) et le profil intérieur de la bague de rattrapage (21) déterminent le jeu formant intervalle d'air du frein.

6. Dispositif de rattrapage de jeu selon l'une des revendications précédentes, caractérisé en ce que la transmission à roue libre sensible à la force exercée (18 - 24) comporte un ressort à boudin (22), qui réalise une liaison par friction du côté entraînement de la transmission à roue libre (18 à 24).
